# EUROPÄISCHE PATENTSCHRIFT

(11) **EP 2 613 239 B1**
(45) Veröffentlichungstag und Bekanntmachung des Hinweises auf die Patenterteilung: **03.10.2018**
(21) Anmeldenummer: 12187897.9
(22) Anmeldetag: 10.10.2012
(51) Int. Cl.: G06F 3/0482, G06F 3/0362

(54) **Mobile Einrichtung zur computergestützten Ein- und Ausgabe von Daten mit einer integrierten Bildschirmausgabeeinheit und Verfahren zur Visualisierung ihrer Bedienung**
Mobile device for computer-assisted input and output of data with an integrated screen output unit and method for visualizing its operation
Installation mobile pour l'émission et la réception de données assistées par ordinateur avec une unité d'émission à l'écran intégrée et procédé de visualisation de sa commande

(30) Priorität: 05.01.2012 DE 102012200129
(43) Veröffentlichungstag der Anmeldung: 10.07.2013
(73) Patentinhaber: SONOTEC Dr. zur Horst-Meyer und Münch OHG, 06112 Halle (DE)
(72) Erfinder: Bader, Nicki, 06120 Halle/Saale (DE); Schütte, Frank, 06128 Halle/Saale (DE); Münch, Hans-Joachim, 06130 Halle/Saale (DE); Zur Horst-Meyer, Santer, 06120 Halle/Saale (DE)
(74) Vertreter: Gulde & Partner

(56) Entgegenhaltungen:
- EP-A1- 1 004 957
- DE-A1-102009 034 913
- GB-A- 2 382 292
- US-A1- 2010 081 478

## Beschreibung

Die Erfindung betrifft eine mobile Einrichtung zur computergestützten Ein- und Ausgabe von Daten mit einer integrierten Bildschirmausgabeeinheit. Außerdem betrifft die Erfindung ein Verfahren zur Visualisierung der Bedienung der erfindungsgemäßen Einrichtung.

Die Einrichtung ist in ihrem Anwendungsumfang nicht auf ein spezielles technisches Nutzerprofil festgelegt, denn sie kann aufgrund ihrer aus sich selbst heraus erklärenden Weise der Bedienung als Hardwarekomponente zur Realisierung von computergestützten Prozessen, beispielsweise in der Mess-, Steuerungs- und Regelungstechnik eingesetzt werden.

Bei der Konzeption von Geräten ist die Gestaltung der Mensch-Maschine-Schnittstelle aufgrund der technischen Umsetzungsmöglichkeiten in Bezug auf die Physiologie des Menschen oft noch problematisch bzw. die entstandene Umsetzung nicht immer selbsterklärend oder intuitiv.

Zwar erschließt sich die Bedienung von Hebeln, Drehknöpfen und Tastern usw. aufgrund der weiten Verbreitung dieser Elemente meist sofort, aber oft mangelt es an eindeutigen Bezügen zwischen den physischen Eingabegeräten und der Reaktion bzw. der Interaktion auf dem Ausgabegerät. Gerade bei Geräten mit ausgedehntem Funktionsumfang und dadurch bedingter komplexer Bedienstruktur kommt diese Tatsache zum Tragen. Beispielsweise werden bei der Bedienung eines Personalcomputers (PC) mittels Computermaus tradierte Bedienmuster vorausgesetzt, die sich der Nutzer nur durch eine vorgeschaltete Anlernphase aneignen kann, wobei er beim Erlernen auf sein Abstraktionsvermögen angewiesen ist.

Erst dann kann die Kommunikation reibungslos funktionieren, ist aber angesichts vieler nutzerseitiger Interpretationsmöglichkeiten fehleranfällig.

Das ist oft ungenügend und bietet weiteres Verbesserungspotential, zumal die Lösung auch technisch aufwändig, komplex und dementsprechend kostenintensiv in der Umsetzung ist. Daraus hervorgehend gibt es andere Lösungen, welche eine intuitivere Gerätebedienung ermöglichen. Beispielsweise bewegt sich der Nutzer eines modernen, mit Touchscreen ausgestattetem Smartphones über direkte Interaktion mittels wischen, tasten, ziehen, schütteln, neigen usw. durch die auf dem Bildschirm angezeigte Menüstruktur.

In diesem druck- und neigungs-/beschleunigungssensitiven Gerät werden die Anzeigeinhalte auch oft dreidimensional dargestellt, wodurch beim Nutzer eine zweite, parallele, virtuelle Realität entsteht. Diese entspricht den grundlegenden Erfahrungen aus physiologischer Sicht viel eher. Dadurch verringert sich die Fehlerquote bei der Eingabe erheblich und die Anlernphase reduziert sich, bezogen auf das vorgehend beschriebene Modell, auf einen Bruchteil.

Als ein dafür typisches Beispiel aus dem Stand der Technik kann DE 20 2008 000 268 U1 "Tragbare Multifunktionsvorrichtung" genannt werden. Die tragbare Multifunktionsvorrichtung besitzt eine Berührungsbildschirmanzeige, einen oder mehrere Prozessoren, einen Speicher mit mehreren Programmen, die durch Aktivierung über die Prozessoren ausgeführt werden. Durch Berührungen auf dem Bildschirm werden Seiteninhalte aufgerufen, die durch Fingertranslationsgesten wieder aus dem sichtbaren Bereich des Bildschirms verschoben werden können.

Aber auch diese Gerätelösung bedingt dafür im Gegenzug einen technisch aufwändigen und komplexen Aufbau und ist deswegen erst bei der Herstellung großer Stückzahlen umsetzbar und wirtschaftlich. Deshalb integrieren Hersteller bei kleineren Geräteserien immer noch konventionelle Eingabe-Einheiten, wie Knöpfe, Inkrementalgeber oder Hebel. Jedoch erschwert sich die Bedienung dieser Geräte und ist oft unverständlich, wenn sie einen vergleichbaren oder unwesentlich geringeren Funktionsumfang wie ein PC oder ein Smartphone haben, zur Steuerung dieser jedoch nur funktionell begrenzte oder zahlreiche bis unüberschaubar viele Eingabeelemente besitzen.

US 2010/0081478 A1 offenbart eine transportable elektronische Einrichtung in Form eines Mobiltelefons mit über ein Scharnier miteinander verbundenem Bildschirm und Bedienteil, Dabei ist an dem Scharnier ein drehbares Element zur Auswahl von Funktionen vorgesehen.

EP 1 004 957 A1 offenbart ein tragbares Terminal wiederum in Form eines Mobiltelefons. Unter dem Display befinden sich eine Hauptfunktionstaste mit jeweils links und rechts davon angeordneten Hilfsfunktionstasten. Diese Tasten werden bei ihrer Aktivierung optisch an der unteren Displaykante zweidimensional abgebildet. Die Hauptfunktionstaste hat eine Scrollfunktion zur Navigation auf dem Bildschirm.

DE 10 2009 034 913 A1 offenbart eine Bedien- und Anzeigevorrichtung für ein Fahrzeug mit einer Anzeigeeinrichtung und mit einem Drehknopf zur Auswahl einer Funktion und/ oder zur Anwahl eines Menüs innerhalb einer mittels der Anzeigeeinrichtung dargestellten hierarchischen Menüstruktur, wobei der Drehknopf eine in beide Richtungen seiner Rotationsachse bewegbare Bedieneinheit bildet und wobei ein Drücken der Bedieneinheit ein Navigieren zwischen zwei Menüebenen in einer ersten Hierarchierichtung und ein Ziehen der Bedieneinheit ein Navigieren zwischen zwei Menüebenen in einer zweiten entgegengesetzten Hierarchierichtung des Menüs bewirkt.

GB 2 382 292 A offenbart ein Mobiltelefon mit Drehrad als Eingabevorrichtung, sowie einer korrespondierenden, auf der graphischen Benutzeroberfläche dargestellten, Menü-Drehwalze.

Nachteile des bekannten Standes der Technik müssen daher mit einer vergleichsweise einfachen und insbesondere in Kleinserien wirtschaftlich fertigbaren Einrichtung überwunden werden.

Die Aufgabe der Erfindung besteht demnach darin, über einen inversen Zugang an einer Einrichtung konventionelle Bedienelemente mit einer modernen rechnergesteuerten Bildschirmausgabeeinheit zu kombinieren, wodurch über eine physiologisch leicht handhabbare Anordnung von Bedienelementen mit unkompliziert erschließbaren Freiheitsgraden eine aus sich heraus selbsterklärende und intuitive Ansteuerung eines technischen Gerätes erfolgen kann und vorhersehbare sowie erwartbare Reaktionen desselben über die Bildschirmausgabeeinheit nachverfolgbar sind.

Mit einer derartigen benutzerfreundlichen Einrichtung und einem Verfahren zur Visualisierung der Bedienung derselben soll der Komfort intuitiver Interfaces mit den Anforderungen an eine wirtschaftliche Herstellung von Kleinserien verbunden werden. Die Aufgabe der Erfindung wird für die eingangs genannte mobile Einrichtung durch den Patentanspruch 1 und für das eingangs genannte Verfahren durch den Patentanspruch 5 gelöst. Die weitere Ausgestaltung der Erfindung wird in den Patentansprüchen 2 bis 4 sowie 6 bis 8 dargelegt.

Zur Erläuterung der Erfindung sind weitere Hinweise erforderlich.

Die Erfindung geht von einer mobilen Einrichtung zur computergestützten Ein- und Ausgabe von Daten mit einer integrierten und einen Bildschirm sowie ein Gehäuse aufweisenden Bildschirmausgabeeinheit aus, wobei an einem Paar gegenüberliegender Rechteckseiten außen am Gehäuse zwei Bedienelemente als in Links- und Rechtslauf ausgebildete zylinderförmige Drehknöpfe I, II mit jeweils axial angebrachtem Taster I, II angebracht sind, deren Drehachsen horizontal über die Bildebene des Bildschirms virtuell verlängert dargestellt werden, wobei mittels des Tasters ein Menü mit weiteren Untermenüs in Tasterdruckrichtung virtuell in die Bildebene geschoben wird.

Weiterhin sind Tastenelemente in paralleler Ausrichtung zu den Drehachsen der Drehknöpfe I und II an der Ober- und an der Unterseite des Bildschirms angeordnet, mit denen Einstellungen von den in den weiteren Untermenüs enthaltenen Funktionswerten auf dem Bildschirm aktivierbar sind, wobei sich die Untermenüs in einem oder in mehreren Menüs befinden und die Funktionswerte mittels realer Drehung am Drehknopf I und einer virtuell darstellbaren Drehung des Drehknopfes I auf dem Bildschirm verändert angezeigt werden und an einem ausgewählten Platz eines Untermenüs speicherbar sind. Die mobile Einrichtung hat als Handgerät den Vorteil, dass sie während der Bedienung nicht abgelegt werden muss und die auf ein Minimum reduzierten Elemente zur Handhabung alle erforderlichen Tätigkeiten zulassen. Jede Drehbewegung an einem der Drehknöpfe I, II, jede Betätigung eines Tasters I, II an den Drehknöpfen I, II und jede Berührung eines der am oberen und am unteren Bildschirmrand angeordneten Tastenelemente bildet einen auf der Bildschirmausgabeeinheit nachverfolgbaren Pfad ab, so dass der Bediener kein abstraktes Vorstellungsvermögen entwickeln muss, um seine Bedienhandlungen logisch zu verstehen, da er sie simultan optisch angezeigt bekommt.

Der Drehknopf I und der Drehknopf II ist jeweils mit einem axial angebrachten Taster I, II ausgestattet. Das hat den Vorteil, dass auf einer virtuellen Drehachse, die die beiden Drehknöpfe I, II über den Bildschirm der Bildschirmausgabeeinheit miteinander verbindet, ein oder mehrere Menüpunkte in Form einer rotierenden Walze vom linken Bildschirmrand in die Bildebene hinein oder wieder zurück in Richtung des Ausgangszustandes geschoben werden können.

Zur Verdeutlichung der Handlungen an der mobilen Einrichtung besitzt diese einen Bildschirm der ausgelegt ist, die Wiedergabe der Bedienung in zwei- oder in dreidimensionaler Abbildung vorzunehmen.

Damit ist optisch in anschaulicher Weise die Körperlichkeit der Drehknöpfe I, II, der Taster I, II, der Tastenelemente und der Pfad ihrer gegebenenfalls derzeitigen Aktivierung darstellbar und der Benutzer ist optisch besser darüber informiert, an welcher Stelle eines Menüs oder Untermenüs er sich gerade befindet. Es kann damit vorteilhafterweise auch eine Selbstkontrolle über ausgeführte Handlungen durchgeführt werden.

Ferner ist die mobile Einrichtung derart ausgebildet, dass der Bildschirm der Bildschirmausgabeeinheit einen Drehknopf I als eine in räumlicher Form dargestellte Walze mit einem Menübalken, auf der einzelne Menüpunkte aufrufbarer Untermenüs aufgetragen sind, zeigt, wobei die Darstellung des Drehknopfes I horizontal in axialer Richtung zur Symbolisierung des gespeicherten Inhaltes, seitlich in die Bildebene hinein mehrfach fortsetzbar ist. Dadurch wird die reale Drehung, nach Einschieben eines Menüs in die Bildebene, des Drehknopfes I in das virtuelle Abbild der rotierenden Walze im Bildschirm der Bildschirmausgabeeinheit "übersetzt" und es kann gleichzeitig erkannt werden, mit welchen Untermenüs die Walze besetzt ist.

Die Auswahl eines Untermenüs auf einer Walze ist durch Rotation derselben unter einen statisch auf der Drehachse verbleibenden Menübalken gegeben, wobei ein Taster I des Drehknopfes I am Ende des Menübalkens auf dem Bildschirm als kreisförmiges Symbol dargestellt ist oder, wenn an der Stelle ein weiteres Untermenü am Menübalken aufrufbar ist, eine horizontale Pfeilform aufweist.
Hierdurch kann sofort erkannt werden, ob und welche Untermenüs einen weiteren vertiefenden Erkenntnisgewinn erwarten lassen.

Die Ausgestaltung der Erfindung zeigt ferner, dass der Drehknopf II eine Verstellfunktion zur Bewegung in einem aufgerufenen Untermenü besitzen kann. Auch diese Handlung ist vorteilhafterweise auf dem Bildschirm darstellbar, wobei der Drehknopf II auch mit anderen - durch Software unterstützte Funktionen - belegt werden kann.

Es kann vorgesehen werden, dass der Taster II am Drehknopf II als ein Element des Schließens des gesamten Menüs oder von allen virtuell sichtbaren Walzen, in Gestalt des Drehknopfes I, ausgebildet ist. Andererseits kann durch längeres Drücken des Tasters I in optisch nachverfolgbarer Weise der Aufruf eines Menüs rückgängig gemacht werden. Ferner kann der Taster II am Drehknopf II eingerichtet sein, durch eine kurze einmalige Betätigung eine Rückwärtsbewegung durch Ebenen des Menüs auszuführen.

Ferner ist die Erfindung dahingehend ausgestaltet, dass Tastenelemente am oberen und unteren Bildrand des Bildschirms der Bildschirmausgabeeinheit vorgesehen sind und sich spiegelbildlich unmittelbar am jeweiligen Rand auf der Gehäuseoberfläche und auf dem Bildschirm gegenüberliegen. Dadurch ist eine sofortige visuelle Kontrolle gegeben, weiches Tastenelement gerade aktiviert ist, da es grafisch hervorgehoben in den Bildschirm expandiert.

Damit die Symbolik auf dem Bildschirm der Bildschirmausgabeeinheit unverwechselbar wahrgenommen wird, ist es von Vorteil, wenn der Bildschirm der Bildschirmausgabeeinheit in Form eines LCD-Displays vorliegt.

Mit der mobilen Einrichtung ist ein Verfahren zur Visualisierung ihrer Bedienung realisierbar, wobei mittels seitlichen, horizontalen manuellen Drucks, einmal oder mehrmals auf einen Taster I am Drehknopf I ein Menü mit weiteren Untermenüs als um eine gedachte horizontale Achse rotierende Walze in einen Teilbereich eines Bildschirms einer Bildschirmausgabeeinheit translatorisch bewegt wird und mittels anschließender Drehung am Drehknopf ein Menüpunkt eines Untermenüs unter einen Menübalken der rotierbaren virtuellen Walze positioniert und das Untermenü dort durch Aktivierung eines Einstellfensters geöffnet wird, wobei über den Drehknopf I neue oder zu verändernde Funktionswerte an den Stellen aktivierter Tastenelemente, die variabel belegbar sind, in ein geöffnetes Untermenü eingelesen werden, die sofort nach Verlassen des jeweiligen Untermenüs und Wechseln in ein anderes Untermenü und/oder Menü gespeichert werden.

Weiterhin ist es mit dem Verfahren zur Visualisierung der Bedienung der Einrichtung möglich, dass durch die Betätigung der Tastenelemente auf der Gehäuseoberfläche eine definierte Expansion und virtuelle Darstellung in die Bildebene des aktivierten Tastenelementes am Bildrand des Bildschirms durchgeführt wird.

Ferner bezieht das mit der mobilen Einrichtung realisierbare Verfahren ein, dass durch manuellen Druck auf den Taster II am Drehknopf II ein mit seinen aufgerufenen Untermenüs geöffnetes Menü sofort geschlossen werden kann, wobei jedoch durch definiert längeres Drücken des Tasters I am Drehknopf I auch eine stufenweise Rückführung in eine erste Menüebene durchgeführt werden kann .

Schließlich kann der Drehknopf II mit einer anderen Funktion belegt werden, wobei er zur Eingabe von Funktionswerten verwendet wird.

Die Erfindung soll anhand eines Ausführungsbeispiels näher erläutert werden. Dazu werden die nachfolgend angegebenen Figuren 1 bis 5 herangezogen.

Es zeigen:
- Figur 1: mobile Einrichtung eingeschaltet, Ausgangsansicht - Draufsicht von oben,
- Figur 2: wie Figur 1, jedoch mit einem aktivierten Menü nebst sichtbaren Menüpunkten aufrufbarer Untermenüs,
- Figur 3: wie Figur 2, jedoch mit rotierend dargestellter Walze eines Menüs,
- Figur 4: wie Figur 2, jedoch mit einem weiteren horizontal nach rechts bewegten und aktivierten Menü,
- Figur 5: wie Figur 1, jedoch mit einem aktivierten Tastenelement am unteren Bildrand des Bildschirms.

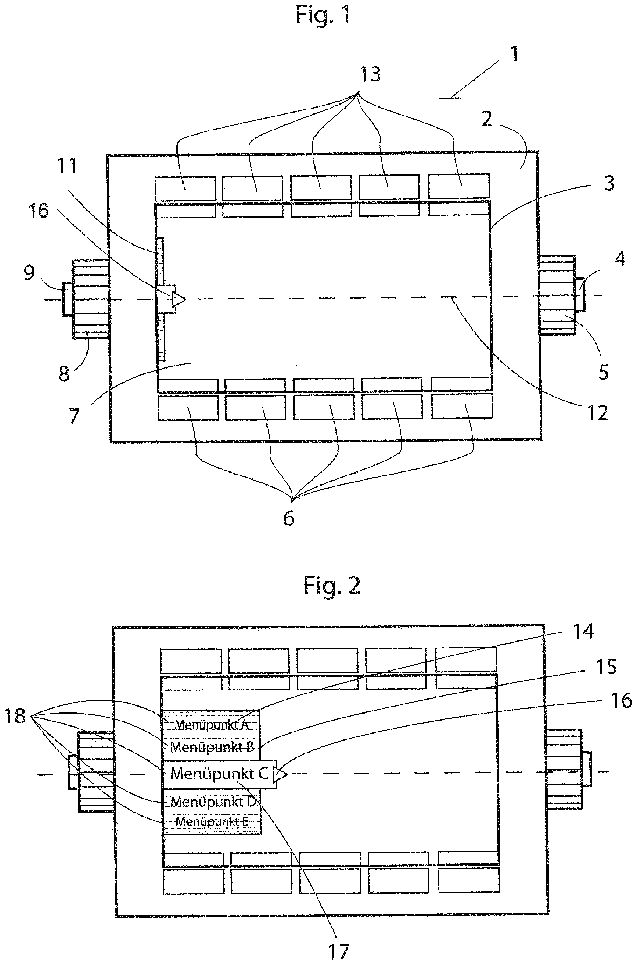

Nach Figur 1 besitzt die mobile Einrichtung 1 zwei gleiche, auf derselben virtuellen Drehachse 12 angeordnete Drehknöpfe I, II 8, 5, welche mit jeweils einem in Achsrichtung bedienbaren Taster 9, 4 ausgestattet sind, wobei sich die Drehknöpfe I, II, 8, 5 an den senkrechten Gehäuseseiten der mobilen Einrichtung 1 befinden. Auf der virtuellen Drehachse 12 zwischen den Drehknöpfe I, II, 8, 5 ist ein Bildschirm 3 in Form eines LCD-Displays 7 eingebunden, welches auf der Vorderseite der mobilen Einrichtung 1 vorhanden ist. Zur Erweiterung des Funktionsumfanges sind am oberen und am unteren Rand des Bildschirms 3 Tastenelemente 6, 13 angebracht, die bei Draufsicht auf die mobile Einrichtung 1 auf parallelen Achsen zur virtuellen Drehachse 12 aufgereiht sind.

Auf dem LCD-Display ist im Ausgangszustand nach Figur 1 eine Menüfensterkante 11 dargestellt, welche derart gestaltet ist, dass eine schmale plastische und zylindrische Fläche, dem Drehknopf I, 8 ähnlich, angedeutet ist. Darüber liegen ein Menübalken 17 und ein Symbol, welches durch einen nicht weiter beschriebenen Pfeil 16 andeutet, dass hier ein Menü oder der Menübalken 17 durch Drücken des Tasters I, 9 erweitert oder nach rechts geschoben werden kann. Durch den Druck auf den linken Taster I, 9 wird ein bisher eingeschobenes Menü von der Menüfensterkante 11 als virtuelle Walze 15 in Tasterdruckrichtung, wie aus Figur 2 ersichtlich, herausgeschoben. Nun wird deutlich, dass es sich dabei um die virtuelle Nachbildung der Zylinderform des Drehknopfes I, 8 handelt.

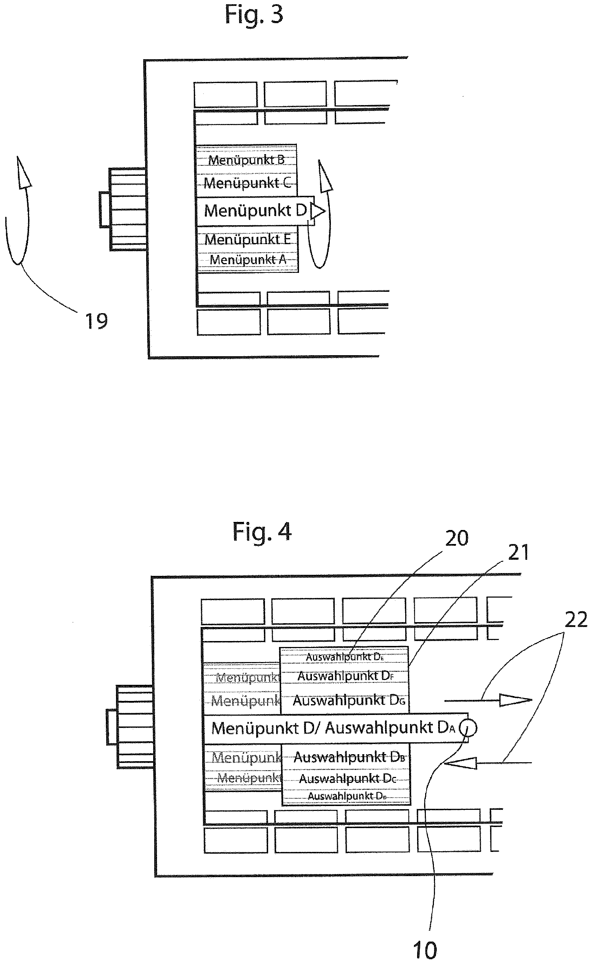

Der plastische Effekt ließe sich durch den Einsatz eines 3D-fähigen LCD-Displays 7 noch weiter verstärken. Auf der oben beschriebenen virtuellen Walze 15 sind entsprechend der räumlichen Zylinderstruktur mehrere Menüpunkte 14 angeordnet. Das Symbol am Endes des Menübalkens 17 behält in diesem Menüzustand seine nicht weiter beschriebene Darstellung als Pfeil 16, um den Bediener darauf hinzuweisen, dass er, um das nächste, im Menübalken 17 beschriebene Untermenü 18 auszuwählen, dieses durch einen weiteren Druck auf den Taster I, 9 nach rechts in die Bildebene des Bildschirms 3 drücken soll. Entspricht der im Menübalken 17 gewählte Menüpunkt 14 nicht der gewünschten Auswahl, wird der gewünschte mittels Drehen des Drehknopfes I, 8 in den Menübalken 17 rotiert. Wird also am Drehknopf I, 8, wie gemäß Figur 3 dargestellt, gedreht, so dreht sich in gleicher Weise die virtuelle Walze 15 und die Menüpunkte 14 wechseln dementsprechend nach Drehrichtung ihre Plätze. Entscheidend ist also, dass der Menübalken 17 dabei statisch, bevorzugt in Höhe der virtuellen Drehachse 12 verbleibt, und sich eine ausgewählte virtuelle Walze 15 unter ihm dreht.

Durch erneuten Druck auf den Taster I, 9 ergibt sich für das gewählte Menü ein Zustand, wie gemäß Figur 4 dargestellt. Eine weitere virtuelle Walze 15 wird nach rechts herausgedrückt und bietet neue Menüpunkte 14 oder am Ende der Menüstruktur entsprechende Auswahlpunkte 20 an. Der Menübalken 17 erweitert sich dabei auf die Breite beider virtueller Walzen 15 und beschreibt den bis dahin gewählten Pfad 22 einschließlich des gerade gewählten Menüs 21 und/oder Auswahlpunktes 20. Diese Pfadangabe ist wichtig, um jederzeit überprüfen zu können, an welcher Stelle im Menüsystem man sich aktuell befindet.

Die Verstellung des Auswahlpunktes 20 erfolgt auf die gleiche Weise wie gemäß Figur 3 beschrieben. Je nach Inhalt stellt sich das Symbol am Ende des Menübalkens 17 in Kreis- oder Pfeilform dar um anzuzeigen, ob der Bediener bei der Auswahl des aktiven Menüs 21 oder Auswahlpunktes 20 weiter in der Menüstruktur voranschreitet oder, ob er einen Auswahlpunkt 20 aktiviert bzw. deaktiviert. Je nach Inhalt des Auswahlpunktes 20 erfolgt somit eine nicht näher beschriebene Aktion/Bildschirmanzeige, bei welcher sich beispielsweise ein übergeordnetes Einstellfenster öffnet oder das Menü 21 nach Aktivierung des Auswahlpunktes 20 ausgeblendet wird.

Im Falle einer Rückwärtsbewegung durch die verschiedenen Menüebenen werden entsprechend der bisher beschriebenen Logik entweder der rechte Taster II, 4 einmalig kurz oder der Taster I, 9 für eine definiert lange Zeitspanne weniger Sekunden gedrückt, um gemäß der Darstellung in Figur 4, über Figur 2, wieder in die Ausgangsansicht nach Figur 1 zu gelangen. Bei einer anderen Belegung des rechten Tasters II, 4 kann optional nur der linke Taster I, 9 zur Rückführung durch die Menüebenen gedrückt werden.

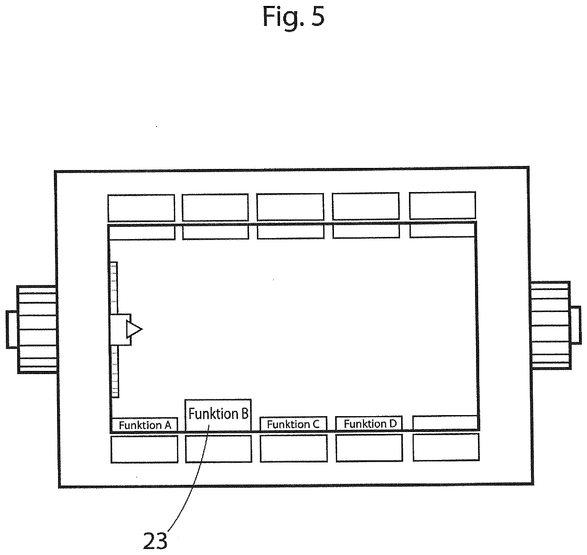

Der Drehknopf II, 5 wird für die in Menüebenen notwendige Verstellfunktion, wie in Figur 5 beschrieben, verwendet. Nicht näher beschrieben werden hier Funktionen für den rechten Drehknopf II, 5, wenn dieser anderweitig für die Steuerung eines Gerätes mittels der mobilen Einrichtung 1 verwendet wird.

Schließlich ist noch die Arbeitsweise mit den Tastenelementen 6, 13 nach Figur 5 zu beschreiben.

Durch die räumliche Nähe und die gleichen Größen- und Farbverhältnisse der physisch vorhandenen Tastenelemente 6, 13 und der auf dem LCD-Display 7 abgebildeten Tastenelemente 23 wirkt jedes Paar wie eine physisch vorhandene und virtuell abgebildete Taste. Durch den Druck auf ein beliebiges Tasterelement 6, 13 expandiert eine dazugehörige Displayform in die Bildebene des Bildschirms 3, um anzuzeigen, dass diese Einstellung nun aktiviert ist. Funktionswerte können sodann, vorzugsweise durch Drehen des linken Drehknopfes I, 8 verstellt oder eingegeben werden und es sind diese im Moment des Verstellens bereits bestätigt. Optional könnte die Einstellung von Funktionswerten auch mittels mehrmaligen Drückens der Tastenelemente 6, 13 oder des Tasters I, 9 erfolgen, wobei beim Wechsel durch Drücken eines anderen Tastenelementes 6, 13 sofort in den Einstellmodus des neuen Tastenelementes 6, 13 gewechselt werden kann. In allen Fällen geht die grafische Darstellung im LCD-Display 7 beim Verlassen wieder in ihre Ausgangsansicht, gemäß Fig. 1, zurück und die bestätigte Einstellung eines aktivierten Tastenelementes 23 wird permanent angezeigt. Denkbar ist, dass alle Tastenpaare nach jeweiligem Funktionsmodus der mobilen Einrichtung 1 frei variieren können und durch die Kennzeichnung im Bereich des LCD-Displays 7 flexibel änderbar sind, falls die Notwendigkeit dazu besteht.

### Bezugszeichenliste

- 1: mobile Einrichtung
- 2: Gehäuseoberfläche
- 3: Bildschirm
- 4: Taster II
- 5: Drehknopf II
- 6: Tastenelement
- 7: LCD-Display
- 8: Drehknopf I
- 9: Taster I
- 10: Symbol
- 11: Menüfensterkante
- 12: virtuelle Drehachse
- 13: Tastenelement
- 14: Menüpunkt
- 15: virtuelle Walze
- 16: Pfeil
- 17: Menübalken
- 18: Untermenü
- 19: Links- und Rechtslauf
- 20: Auswahlpunkt
- 21: Menü
- 22: Pfad
- 23: Tastenelement, aktiviert

## Patentansprüche

1. Mobile Einrichtung zur computergestützten Ein- und Ausgabe von Daten mit einer integrierten Bildschirmausgabeeinheit aufweisend einen Bildschirm (3) und ein Gehäuse, **dadurch gekennzeichnet, dass** an einem Paar gegenüberliegender Rechteckseiten außen am Gehäuse zwei Bedienelemente als in Links- und Rechtslauf ausgebildete zylinderförmige Drehknöpfe I,II (8,5) mit jeweils axial angebrachtem Taster I, II (9,4) angebracht sind, deren Drehachsen (12) horizontal über die Bildebene des Bildschirms (3) virtuell verlängert dargestellt werden, wobei mittels des Tasters I (9) ein Menü (21) mit weiteren Untermenüs (18) in Tasterdruckrichtung virtuell in die Bildebene geschoben wird, und wobei Tastenelemente (6,13) in paralleler Ausrichtung zur Drehachse (12) von Drehknopf I (8) und Drehknopf II (5) an der Ober- und an der Unterseite des Bildschirms (3) angeordnet sind, mit denen Einstellungen von den in den weiteren Untermenüs (18) enthaltenen Funktionswerten auf dem Bildschirm (3) aktivierbar sind, wobei sich die Untermenüs (18) in einem oder in mehreren Menüs (21) befinden und die Funktionswerte mittels realer Drehung am Drehknopf I (8) und einer virtuell darstellbaren Drehung des Drehknopfes I (8) auf dem Bildschirm (3) verändert angezeigt werden und an einem ausgewählten Platz eines Untermenüs (18) speicherbar sind.

2. Mobile Einrichtung nach Anspruch 1, **dadurch gekennzeichnet, dass** der Bildschirm (3) der Bildschirmausgabeeinheit den Drehknopf I (8) als eine in räumlicher Form dargestellte Walze (15) mit einem Menübalken (17) auf der einzelne Menüpunkte (14) aufrufbarer Untermenüs (18) aufgetragen sind, zeigt, wobei die Darstellung des Drehknopfes I (8) horizontal in axialer Richtung zur Symbolisierung des gespeicherten Inhaltes, seitlich in die Bildebene hinein, mehrfach fortsetzbar ist.

3. Mobile Einrichtung nach Anspruch 1, **dadurch gekennzeichnet, dass** die Tastenelemente (6,13) am oberen und unteren Bildrand des Bildschirms (3) der Bildschirmausgabeeinheit sich spiegelbildlich unmittelbar am jeweiligen Rand auf der Gehäuseoberfläche (2) und auf dem Bildschirm (3) gegenüberliegen.

4. Mobile Einrichtung nach einem der vorhergehenden Ansprüche, **dadurch gekennzeichnet, dass** der Bildschirm (3) der Bildschirmausgabeeinheit ein LCD-Display (7) ist.

5. Verfahren zur Visualisierung der Bedienung der Einrichtung nach Anspruch 1, **dadurch gekennzeichnet, dass** mittels seitlichen, horizontalen, manuellen Drucks einmal oder mehrmals auf einen Taster I (9) am Drehknopf I (8) ein Menü (21) mit weiteren Untermenüs (18) als um eine virtuelle horizontale Achse rotierende Walze in einen Teilbereich eines Bildschirms (3) einer Bildschirmausgabeeinheit translatorisch bewegt wird und mittels anschließender Drehung am Drehknopf I (8) ein Menüpunkt (14) eines Untermenüs (18) unter einen Menübalken (17) der rotierbaren virtuellen Walze positioniert und das Untermenü (18) dort durch Aktivierung eines Einstellfensters geöffnet wird, wobei mittels an einem Menüpunkt (14) eines Untermenüs (18) angebrachten Pfeils (16) ein Pfad (22) für weitere aktivierbare Menüs (21) mit entsprechenden Untermenüs (18) angegeben wird, die von links nach rechts in den Bildschirm (3) der Bildschirmausgabeeinheit entlang der virtuellen Achse zwischen dem Drehknopf I (8) und dem Drehknopf II (5) gezogen werden, wobei über den Drehknopf I (8) neue oder zu verändernde Funktionswerte an den Stellen aktivierter Tastenelemente (6,13), die variabel belegbar sind, in ein geöffnetes Untermenü (18) eingelesen werden, die sofort nach Verlassen des jeweiligen Untermenüs (18) und Wechseln in ein anderes Untermenü (18) und/oder Menü (21) gespeichert werden.

6. Verfahren zur Visualisierung der Bedienung der Einrichtung nach Anspruch 5, **dadurch gekennzeichnet, dass** durch die Betätigung der Tastenelemente (6,13) auf der Gehäuseoberfläche eine definierte Expansion und virtuelle Darstellung in die Bildebene des aktivierten Tastenelementes (6,13) am Bildrand des Bildschirms (3) durchgeführt wird.

7. Verfahren zur Visualisierung der Bedienung der Einrichtung nach Anspruch 5 oder 6, **dadurch gekennzeichnet, dass** durch manuellen Druck auf den Taster II (4) am Drehknopf II (5) ein mit seinen aufgerufenen Untermenüs (18) geöffnetes Menü (21) sofort geschlossen wird, wobei jedoch durch definiert längeres Drücken des Tasters I (9) am Drehknopf I (8) auch eine Rückführung in eine erste Ebene des Menüs (21) durchgeführt wird.

8. Verfahren zur Visualisierung der Bedienung der Einrichtung nach den Ansprüchen 5 bis 7, **dadurch gekennzeichnet, dass** der Drehknopf II (5) zur Eingabe von Funktionswerten verwendet wird.

## Claims

1. Mobile device for computer-assisted input and output of data with an integrated screen output unit comprising a screen (3) and a housing, **characterized in that** two operation elements are attached to a pair of opposite rectangles sides outside at the housing as cylindrical rotary knobs I, II (8, 5) designed in left- and right course
and having an axially mounted button I, II (9, 4), respectively, whose rotation axes (12) are represented horizontally over the image plane of the screen (3) in a virtually extended manner,
wherein a menu (21) having further sub-menus (18) is pushed virtually into the image plane in the button push direction by means of the button I (9), and
wherein button elements (6, 13) are arranged at the upper and on the lower side of the screen (3) in parallel alignment to the rotation axis (3) of rotary knob I (8) and rotary knob II (5) by which settings of the function values contained in the further sub-menus (18) can be activated on the screen (3),
wherein the sub-menus (18) are located in one or more menus (21), and the function values are displayed on the screen (3) in an altered manner by a real rotation of the rotary button I (8) and
by a virtually representable rotation of the rotary knob I (8) and can be stored in a selected place of a sub-menu (18).

2. Mobile device according to claim 1, **characterized in that** the screen (3) of the screen output unit displays the rotary knob I (8) as a roller (15) represented in spatial form with a menu bar (17) on which individual menu items (14) of addressable sub-menus (18) are applied,
wherein the representation of the rotary knob I (8) can be repeatedly continued horizontally in axial direction laterally into the image plane in order to symbolize the stored content.

3. Mobile device according to claim 1, **characterized in that** the button elements (6, 13) on the upper and lower image edge of the screen (3) of the screen output unit are opposite each other in a mirror image manner directly at the respective edge on the housing surface (2) and on the screen (3).

4. Mobile device according to one of the preceding claims, **characterized in that** the screen (3) of the screen output unit is a LCD-display (7).

5. Method for visualizing the operation of the device according to claim 1, **characterized in that**
a menu (21) with further sub-menus (18) is moved translationally into a sub-region of a screen (3) of a screen output unit
as a roller rotating around a virtual horizontal axis,
by means of a lateral, horizontal, manual pressure on a button I (9) at the rotary knob (8) for one or more times,
and a menu item (14) of a sub-menu (18) is positioned under a menu bar (17) of the rotatable virtual roller by a subsequent rotation of the rotary knob (8),
and the sub-menu (18) is opened there by activating a setting window,
wherein a path (22) for further activable menus (21) with respective sub-menus (18)
that are drawn into the screen (3) of the screen output unit from left to right along the virtual axis between the rotary knob I (8) and the rotary knob II (5) is indicated by means of an arrow (16) placed on a menu item (14) of a sub-menu (18),
wherein, via the rotary knob I (8), new function values or function values to be changed,
at the places of activated button elements (6, 13) that can be variably programmed, are read in an opened sub-menu (18), which function values are stored immediately after leaving the respective sub-menu (18) and changing to another sub-menu (18) and/or menu (21).

6. Method for visualizing the operation of the device according to claim 5, **characterized in that**, by actuating the button elements (6, 13) at the housing surface, a defined expansion and virtual representation into the image plane of the activated button element (6, 13) are effectuated at the image edge of the screen (3).

7. Method for visualizing the operation of the device according to claim 5 or 6, **characterized in that**, by manual pressure onto the button II (4) at the rotary knob II (5), a menu (21) opened with its called-up sub-menus (18) is immediately closed, but in which a return to a first plane of the menu (21) is effectuated by pressing the button I (9) of the rotary knob I (8) longer in a defined way.

8. Method for visualizing the operation of the device according to claims 5 to 7, **characterized in that** the rotary knob II (5) is used to enter function values.

## Revendications

1. Installation mobile pour l'entrée et la sortie de données assistées par ordinateur avec une unité de sortie à l'écran intégrée, comprenant un écran (3) et un boîtier, **caractérisée en ce que** deux éléments de commande sont attachés sur une paire de côtés rectangulaires opposés, à l'extérieur du boîtier, comme des boutons rotatifs I, II (8, 5) de forme cylindrique formés dans le sens de marche à gauche et à droite et ayant un bouton-poussoir I, II (9, 4) monté axialement, respectivement, dont les axes de rotation (12) sont représentés horizontalement sur le plan d'image de l'écran (3) de manière virtuellement prolongée, un menu (21) ayant des sous-menus (18) supplémentaires étant poussé virtuellement dans le plan d'image dans le sens de pression sur le bouton-poussoir, au moyen du bouton-poussoir I (9), et des éléments bouton-poussoir (6, 13) par lesquels des réglages des valeurs de fonction inclues dans les sous-menus (18) supplémentaires peuvent être activés sur l'écran étant disposés sur le côté supérieur et sur le côté inférieur de l'écran (3) en alignement parallèle avec l'axe de rotation (12) du bouton rotatif I (8) et du bouton rotatif II (5), les sous-menus (18) se trouvant dans un ou plusieurs sous-menus (21), et les valeurs de fonction étant affichées de manière modifiée sur l'écran (3), au moyen d'une rotation réelle du bouton rotatif I (8) et une rotation du bouton rotatif I (8) qui peut être représentée virtuellement, et pouvant être stockées dans un endroit sélectionné d'un sous-menu (18).

2. Installation mobile selon la revendication 1, **caractérisée en ce que** l'écran (3) de l'unité de sortie à l'écran affiche le bouton rotatif I (8) comme un rouleau (15) représenté sous forme spatiale ayant une barre de menu (17) sur laquelle sont appliqués des éléments de menu (14) individuels de sous-menus (18) appelables, la représentation du bouton rotatif I (8) pouvant être continue de manière répétée horizontalement dans le sens axial, latéralement dans le plan d'image, afin de symboliser le continu stocké.

3. Installation mobile selon la revendication 1, **caractérisée en ce que** les éléments bouton-poussoir (6, 13) se trouvant sur les bords supérieur et inférieur de l'écran (3) de l'unité de sortie à l'écran sont opposés l'un à l'autre de manière symétrique directement sur le bord respectif sur la surface du boîtier (2) et sur l'écran (3).

4. Installation mobile selon l'une des revendications précédentes, **caractérisée en ce que** l'écran (3) de l'unité de sortie à l'écran est un écran LCD (7).

5. Procédé de visualisation de la commande de l'installation selon la revendication 1, **caractérisé en ce qu'**un menu (21) ayant d'autres sous-menus (18) est déplacé en translation dans une zone partielle d'un écran (3) d'une unité de sortie à l'écran comme un rouleau tournant autour d'un axe horizontal virtuel, au moyen d'une pression latérale, horizontale, manuelle sur un bouton-poussoir I (9) situé sur le bouton rotatif I (8) une ou plusieurs fois, et un élément de menu (14) d'un sous-menu (18) est placé sous une barre de menu (17) du rouleau virtuel pouvant tourner, au moyen d'une rotation subséquente du bouton rotatif I (9), et le sous-menu (18) y est ouvert par l'activation d'une fenêtre de réglage, un chemin (22) destiné à d'autres menus (21) activables ayant des sous-menus (18) respectifs qui sont tirés dans l'écran (3) de l'unité de sortie à l'écran de gauche à droite le long de l'axe virtuel entre le bouton rotatif I (8) et le bouton rotatif II (5) étant indiqué au moyen d'une flèche (16) placée au niveau d'un élément de menu (14) d'un sous-menu (18), des valeurs de fonction nouvelles ou à modifier se trouvant aux endroits d'éléments bouton-poussoir (6, 13) attribuables variablement sont lues dans un sous-menu (18) ouvert, ces valeurs de fonction étant stockées immédiatement après avoir quitté le sous-menu (18) respectif et après avoir passé dans un autre sous-menu (18) et/ou menu (21).

6. Procédé de visualisation de la commande de l'installation selon la revendication 5, **caractérisé en ce qu'**une expansion définie et une représentation virtuelle jusque dans le plan d'image de l'élément bouton-poussoir (6, 13) sont effectuées sur le bord d'image de l'écran (3) par l'actionnement des éléments bouton-poussoir (6, 13) sur la surface supérieure du boîtier.

7. Procédé de visualisation de la commande de l'installation selon la revendication 5 ou la revendication 6, **caractérisé en ce qu'**un menu (21) ouvert en association avec ses sous-menus (18) appelés est fermé immédiatement par une pression manuelle sur le bouton-poussoir II (4) situé sur le bouton rotatif II (5), mais, de même, un retour au premier plan du menu (21) étant effectuée par une pression prolongée de manière définie du bouton-poussoir I (9) situé sur le bouton rotatif I (8).

8. Procédé de visualisation de la commande de l'installation selon les revendications 5 à 7, **caractérisé en ce que** le bouton rotatif II (5) est utilisé pour entrer des valeurs de fonction.
